# EUROPÄISCHE PATENTSCHRIFT

(11) **EP 1 044 796 B1**
(45) Veröffentlichungstag und Bekanntmachung des Hinweises auf die Patenterteilung: **11.01.2006**
(21) Anmeldenummer: 00890111.8
(22) Anmeldetag: 10.04.2000
(51) Int. Cl.: B32B 7/12, B32B 7/08, E04C 3/29

(54) **Mehrschichtiges Verbundbauelement sowie Verfahren zu dessen Herstellung**
Multilayered composite building element and its manufacturing process
Elément de construction composite multicouche et son procédé de fabrication

(30) Priorität: 13.04.1999 AT 64699
(43) Veröffentlichungstag der Anmeldung: 18.10.2000
(73) Patentinhaber: ISOSPORT VERBUNDBAUTEILE GESELLSCHAFT MBH, 7000 Eisenstadt (AT)
(72) Erfinder: Krenn, Klaus, 7082 Donnerskirchen (AT)
(74) Vertreter: Patentanwälte BARGER, PISO & PARTNER

(56) Entgegenhaltungen:
- DE-A- 3 339 454
- FR-A- 2 173 318
- FR-A- 2 351 784
- GB-A- 2 066 156
- US-A- 4 463 043

## Beschreibung

Die Erfindung betrifft ein Verbundbauelement nach dem Oberbegriff des Anspruchs 1 sowie ein Herstellungsverfahren nach dem Oberbegriff des Anspruchs 3.

### Stand der Technik

Ein Verbundbauelement gemäß dem Oberbegriff des Anspruchs 1 ist aus der DE 197 24 361 A1 bekannt. Gemäß dieser sind z.B. aus Metallblech, insbesondere Aluminiumblech, bestehende Tragschichten flächenhaft mit einer Füllschicht in Form eines Schaumstoffkerns verklebt. Aus den DE 33 39 454 A, FR-A-2 351 784, GB-A- 2 066 156 und US-A- 4 463 043 sind ebenfalls artgleiche mehrschichtige Verbundbauelemente sowie Verfahren zu deren Herstellung bekannt. Unter Einsatzbedingungen, bei denen das Bauelement hohen Schubkräften bzw. hohen thermischen Spannungen ausgesetzt ist, ist jedoch eine Verbundfestigkeit zwischen dem Schichten erster und zweiter Art erwünscht oder notwendig, die sich mit den herkömmlichen Verbundschichten nicht ohne weiteres erreichen läßt.

Aufgabe der Erfindung ist daher die Schaffung eines Verbundbauelementes, das sich durch verbesserte Verbundfestigkeit bei gleichzeitig einfacher und rationeller Herstellungsweise auszeichnet.

### Darstellung der Erfindung

Die erfindungsgemäße Lösung dieser Aufgabe ist durch die Gesamtheit der Merkmale des Anspruchs 1 hinsichtlich des Verbundbauelementes und hinsichtlich des Herstellungsverfahrens durch die Gesamtheit der Merkmale des Anspruchs 3 bestimmt.

Die Anordnung einer Verbundschicht mit einer von der Schicht zweiter Art (Füllschicht). zur Schicht erster Art (Trageschicht) abnehmenden Porosität ermöglicht die erstrebte Verbesserung der Verbundfestigkeit u.a. durch eine Verminderung der Spannungs- und Verformungsgradienten im Übergangsbereich zwischen den Schichten. Für die oft bevorzugten Kombinationen von metallischen Schichten mit Schichten aus Polymer-Schaumstoff wie Hartschaum ergibt sich eine aufgabengemäße Verbesserung einerseits durch eine Mikroverzahnung, d.h. eine formschlüssige Verbindung zwischen dem Polymer der Verbundschicht, das heißt der Schicht dritter Art, und dem gegebenenfalls porösen Material der Schicht zweiter Art, das heißt der Füllschicht, und andererseits durch eine im wesentlichen lückenlose Oberfläche mit dem kompakten Untergrund an der Verbundschicht für die stoffschlüssige Verbindung, beispielsweise durch Klebhaftung, zur hochfesten und hochsteifen Schicht erster Art, das heißt der Tragschicht. Außerdem gestattet eine relativ stark bemessene Verbundschicht eine gegebenenfalls notwendige Versteifung einer benachbarten Blech-Tragschicht, wie diese durch stärkere Blechdicke nur mit größerem Gewicht erreichbar wäre. Weiterhin bietet eine kompakte Polymer-Verbundschicht infolge der hierin ohne weiteres verfügbaren Elastizität den Vorteil einer Abdichtung der Füllschicht im Falle der z.B. für Schalungsplatten üblichen Perforation der Tragschicht durch Nagelung. Diesbezüglich haben sich für die erfindungsgemäß vorgesehenen Polymer-Verbundschichten bestimmte Bereiche der Verbundschichtdicke in Abhängigkeit von der Füllschichtdicke als weithin optimal erwiesen, nämlich Verbundschichtdicken von mindestens etwa 5 %, bei höheren Festigkeits- und Dichtheitsanforderungen vorzugsweise von mindestens etwa 10 % der Füllschichtdicke.

Die Schicht dritter Art (Verbundschicht) kann wenigstens teilweise aus thermoplastischem Polymermaterial bestehen. Dies erleichtert vor allem die Anwendung leistungsfähiger Extrusions- und Formgebungstechnologien. Ferner ergibt sich in Kombination mit aus polymerem Schaumstoff bestehenden Füllschichten und bei geeigneter Porenstruktur eine besonders zuverlässige, nämlich mikro-formschlüssige, insbesondere scherkraftübertragende Verbindung der Schichten untereinander.

Besondere Ausgestaltungen der Erfindung mit wesentlichen Vorteilen betreffen die Struktur der Tragschichten, daß heißt der Schichten erster Art. Anstelle der bei Verbundbauelementen an sich üblichen Blech-Tragschichten können insbesondere als Kompositelemente ausgebildete Schichten in Betracht kommen, die eine mindestens teilweise aus Polymermaterial bestehende Grundmasse sowie eine in diese eingebettete Faser- oder Drahtarmierung von höherer Zugfestigkeit und höherem Elastizitätsmodul aufweisen. Auch für diese Grundmassen werden thermoplastische Polymermaterialien bevorzugt. Insbesondere haben sich in einem breiten Anwendungsfeld Tragschichten bewährt, die wenigsten teilweise aus einem Polymer oder einem Polymer-Komposit mit einer elastischen und plastischen Bruchverformung sowie mit einer Zugfestigkeit von mindestens etwa 50 N/mm² und einem Zug-Elastizitätsmodul von mindestens etwa 3 kN/mm² bestehen.

Die Materialauswahl für die Faserarmierungen bietet ebenfalls markante Optimierungsmöglichkeiten. Bei Glasfaserarmierungen sind weiterhin Werte der Zugfestigkeit von mindestens etwa 2000 N/mm², vorzugsweise von mindestens etwa 3200 N/mm² sowie Werte für den Zug-Elastizitätsmodul von mindestens etwa 50 kN/mm², vorteilhafterweise von mindestens etwa 70 kN/mm² zu bevorzugen. Für höhere Beanspruchungen kommen Armierungen in Betracht, die wenigstens teilweise aus Carbonfasern bestehen, im Fall eines Bedarfs an größerer Zähigkeit und Knickunempfindlichkeit auch aus Aramidfasern. Mit letzteren und anderen hochwertigen Polymermaterialien lassen sich Faserarmierungen mit einer Zugfestigkeit von mindestens etwa 1500 N/mm², vorzugsweise von mindestens etwa 2600 N/mm², und mit einem Zug-Elastizitätsmodul von mindestens etwa 50 kN/mm², vorzugsweise von mindestens etwa 110 kN/mm², verwirklichen.

Grundsätzlich, vor allem bei geringeren Festigkeits-, jedoch höheren Zähigkeitsanforderungen, kommen auch Armierungen aus metallischen Fasern oder Drähten in Betracht, insbesondere aus korrosionsbeständigen oder entsprechend beschichteten metallischen Fasern oder Drähten. Die Zugfestigkeit sollte jedoch im allgemeinen Werte von mindestens etwa 420 N/mm², vorzugsweise von mindestens etwa 950 N/mm², und der Zug-Elastizitätsmodul Werte von mindestens etwa 70 kN/mm², vorzugsweise von mindestens etwa 200 kN/mm², aufweisen.

Die Armierungen können als Gewebe, Gelege oder Geflecht mit wenigstens abschnittsweise zueinander .unter einem Winkel, vorzugsweise wenigstens annähernd einem rechten Winkel angeordneten Fasern bzw. Drähten ausgebildet sein. Ferner kommen Armierungen in Form eines Wirrfasergebildes in Betracht.

Für die Füllschicht, daß heißt der Schicht zweiter Art, wird bevorzugt polymerer Schaumstoff eingesetzt, wobei vorwiegend thermoplastischer, für Sonderanforderungen jedoch auch duroplastischer Polymer-Schaumstoff in Betracht kommt. Für gewisse Optimierungen, insbesondere hinsichtlich Festigkeit und Gewicht bzw. hinsichtlich des Verhältnisses dieser Parmeter, kann mindestens eine Füllschicht vorgesehen werden, die wenigstens abschnittsweise eine Struktur mit einem vorgegebenen Porositätsgradienten aufweist.

### Kurze Beschreibung der Zeichnungen und ein Wee zur Ausführung der Erfindung

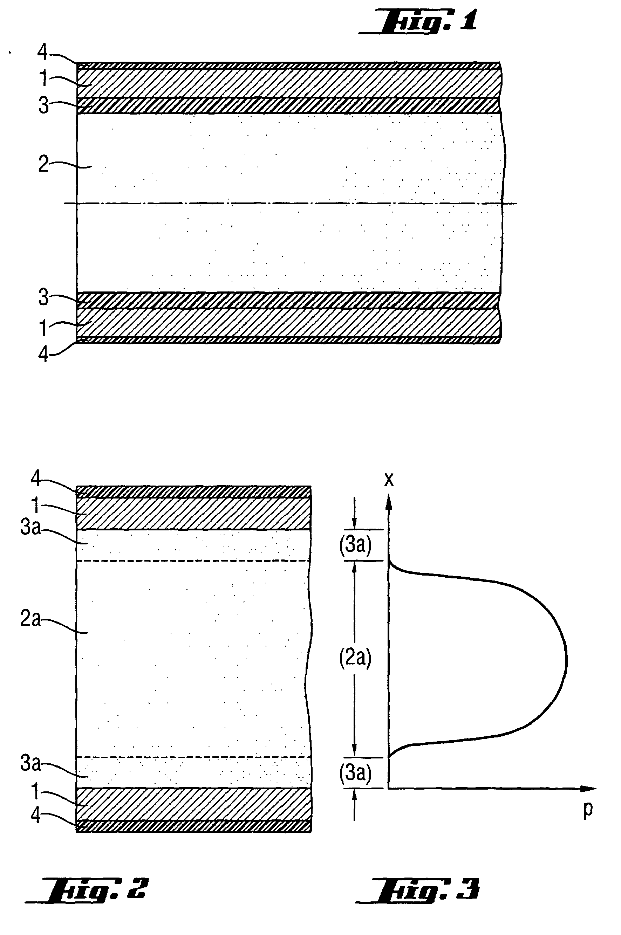

In der zeichnerischen Darstellung gemäß Fig. 1 ist der Querschnitt eines plattenförmigen Verbundbauelementes schematisch und vereinfacht dargestellt. Hier ist an beiden Oberflächen einer Schicht zweiter Art (2), welche als zentrale Schaumstoff-Füllschicht ausgebildet ist, je eine Schicht dritter Art (3) aus thermoplastischem Polymermaterial form- und stoffschlüssig angeformt. Diese dienen als Verbundschichten mit je einer Schicht erster Art (1), einer sogenannten Tragschicht, beispielsweise einem Blech aus einer geeigneten Aluminiumlegierung wie etwa Peraluman ^{R}, in Form- und Stoffschluß. So ergibt sich eine hochfeste und nagelbare Schalungsplatte von beträchtlicher Form-steifigkeit. Die Außenflächen des Verbundbauelements sind mit einer korro-sionsbeständigen Deckschicht (4), vorzugsweise aus einem thermoplastischen oder duroplastischen Polymermaterial versehen.

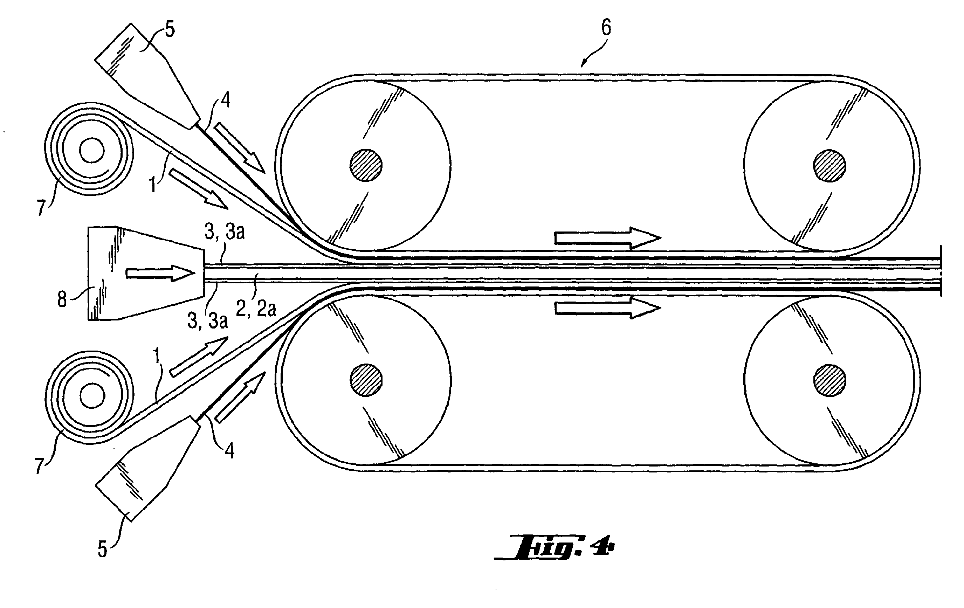

Fig. 2 zeigt einen erfindungsgemäßen schematischen Plattenquerschnitt mit einer Schicht zweiter Art, die wenigstens abschnittsweise eine in Richtung von der Querschnittsmitte zu den außenliegenden als Tragschichten fungierenden Schichten erster Art (1) eine abnehmende Porosität p aufweist, wie im Diagramm gemäß Fig. 3 über der Querschnittsdicke x angedeutet ist. Es ergeben sich somit zwei Schichten, nämlich die poröse Füllschicht (2a) sowie die Schicht dritter Art (3a), die zur Füllschicht (2a) eine nahezu verschwindende Porosität aufweist.

Zur Herstellung von Verbundbauelementen kann eine Anlage wie gemäß Fig. 4 schematisch dargestellt, eingesetzt werden.

Für Verbundbauelemente, wie sie in Figur 1 dargestellt sind, werden jeweils zwei Schichten erster Art (1) in Form von Tragschichten an die Außenflächen einer Kompositstruktur bestehend aus der Schicht zweiter Art (2) und den als Verbundschichten dienenden Schichten dritter Art (3) herangeführt. Die Tragschichten (1) bestehen beispielsweise aus Aluminiumbändern, Fasergeweben oder Fasermatten, und werden auf den Vorratsrollen (7) gelagert. Die aus thermoplastischem Polymermaterial wie Polypropylen oder Polypropylen-Copolymeren bestehenden und in geeignet plastischen Zustand aufgeheizten Schichten (2) und (3) werden in einer an sich üblichen Coextrusionsanlage (8) erzeugt und in einer Vereinigungszone im Eingang einer Doppelbandpresse (DBP) mit den Tragschichtbändern (1) zusammengeführt. Vor dem Eintritt in die Doppelbandpresse (6) können die Außenseiten der Tragschichten (1) zusätzlich mit Polymermaterial (4) versehen werden. Der Auftrag erfolgt mittels Düsenbeschichtungsanlagen (5). Bei Verwendung einer Faserarmierung, beispielsweise in Form von Glasfasermatten, werden diese anschließend in die Polymermaterialschicht (4) eingebettet (nicht dargestellt), sodaß diese die Funktion eines Matrixmaterials einer Kompositstruktur bilden. In der Doppelbandpresse (6) werden sodann alle Schichten unter Druckbeaufschlagung in Flächen-Normalrichtung in einen flächenhaften Verbundkörper mit form- und/oder stoffschlüssiger Verbindung zwischen allen Schichtbahnen übergeführt. Der so gebildete Verbundkörper wird innerhalb der Doppelbandpresse bzw. im Anschluß an diese, gegebenenfalls unter Dicken- und/oder Breiten- bzw. Kanten-Formgebung, zu einem Verbundbauelement oder Verbundbauelement-Rohling verfestigt.

Für die Herstellung von erfindungsgemäßen Verbundbauelementen der in Fig. 2 gezeigten Art wird abweichend von Vorstehendem z.B. eine Schicht erster Art (1) und eine Schicht zweiter Art, die einen polymeren Schaumbildner enthält, kontinuierlich der Vereinigungszone zugeführt. Innerhalb des Querschnitts der Schicht zweiter Art wird die Aktivierung und/oder Dotierung des Schaumbildners aus dem Inneren dieser Schicht in Richtung zu jeweils einer Schicht erster Art (1) benachbarten Außenfläche derart abnehmend eingestellt, daß einerseits die poröse Schicht (2a) und andererseits die Schicht dritter Art (3a) mit nahezu verschwindender Porosität in Richtung zur Tragschicht (1) gebildet werden. Die Einstellung der abnehmenden Porosität erfolgt mittels der Coextrusionsanlage (8) derart, daß zur Herstellung der Füllschicht (2a) ein hohes Ausmaß an Schaumbildner im Vergleich zur Herstellung der nahezu nicht porösen Schicht (3a) eingesetzt wird. Die Porosität der Schicht (3a) beträgt verteilt über den Gesamtquerschnitt max. 10 % im Vergleich zu der gänzlich unporösen, sohin kompakten Schicht (3) aus Figur 1.

Die Porosität der Füllschicht (2a) hingegen beträgt mindestens etwa 60 % im Vergleich zum kompakten Material. In der Vereinigungszone und in der sich anschließenden Doppelbandpresse (6) werden die Schichten wiederum unter Druckbeaufschlagung in einen flächenhaften Verbundkörper mit form- bzw. stoffschlüssiger Verbindung übergeführt. Zusätzlich kann der Verbundkörper ebenso mittels einer Poly-merbeschichtung (4) versehen werden, in welcher zur Ausbildung einer Matrixstruktur eine Armierung, beispielsweise in Form von Glasfasermatten angebracht ist.

Aufgrund der Schicht dritter Art (3, 3a) zeigen die beispielsgemäß hergestellten Verbundbauelemente somit eine, gegenüber bekannten, verbesserte Verbundfestigkeit und können daher auch hohen Schubkräften und hohen thermischen Spannungen, wie sie in der Baubranche üblicherweise auftreten, ausgesetzt werden.

### Gewerbliche Anwendbarkeit

Das erfindungsgemäße mehrschichtige Verbundbauelement zeichnet sich gegenüber bekannten durch verbesserte Verbundfestigkeit bei gleichzeitig einfacher und rationeller Herstellungsweise aus. Demgemäß eignet es sich für vierlei Anwendungen vorzugsweise für Fahrzeugaufbauten, Fassadenkonstruktionen und für den Bootsbau.

## Patentansprüche

1. Mehrschichtiges Verbundbauelement, bestehend aus wenigstens einer Tragschicht (1), die wenigstens teilweise Material mit elastischer und plastischer Bruchverformung sowie Material mit einer Zugfestigkeit von mindestens etwa 50 N/mm² aufweist (Schicht erster Art), wenigstens einer Füllschicht (2a) mit höherer Porosität (Schicht zweiter Art) und wenigstens einer diese verbindende Verbundschicht (3a), **dadurch gekennzeichnet, dass** die Verbundschicht (3a) eine von der Füllschicht (2a) zur Tragschicht (1) abnehmende Porosität aufweist (Fig. 2, 3).

2. Mehrschichtiges Verbundbauelement nach Anspruch 1, **dadurch gekennzeichnet, dass** die Verbundschicht (3a) als Außenflächenzone der Füllschicht (2a) ausgeführt ist.

3. Verfahren zur Herstellung eines mehrschichtigen Verbundbauelementes nach Anspruch 1 oder 2, gemäß welchem Bahnen einzelner Schichten einer Vereinigungszone zugeführt und in dieser durch Druck- und/oder Temperaturanwendung verbunden werden, **dadurch gekennzeichnet, dass** der Vereinigungszone wenigstens eine Tragschicht (1) und wenigstens eine aus thermoplastischem Polymermaterial bestehende Füllschicht (2a) zugeführt werden, wobei der Füllschicht (2a) ein spätestens in der Vereinigungszone wirksam werdender polymerer Schaumbildner zugegeben wird, der an wenigstens einer ihrer Außenflächenzonen eine Verbundschicht (3a) mit von der Füllschicht (2a) zur Tragschicht (1) abnehmender Porosität bildet (Fig. 4).

## Claims

1. A laminated composite structural member, consisting of at least one substrate (1) which at least partly has material with elastic and plastic fracture deformation and material with a tensile strength of at least approximately 50 N/mm² (layer of the first type), at least one filler layer (2a) of high porosity (layer of the second type) and at least one bonding layer (3a) joining the latter, **characterised in that** the bonding layer (3a) is of a porosity (Figs. 2,3) decreasing from the filler layer (2a) to the substrate (1).

2. A laminated composite structural member according to Claim 1, **characterised in that** the bonding layer (3a) is in the form of an outer surface zone of the filler layer (2a).

3. A method of producing a laminated composite structural member according to Claim 1 or Claim 2, according to which sheets of individual layers are fed to a combining zone and are bonded therein by applying pressure and/or heat, **characterised in that** at least one substrate (1) and at least one filler layer (2a) consisting of thermoplastic polymer material are fed to the combining zone, wherein a polymeric foaming agent is fed to the filler layer (2a), which foaming agent becomes active at latest in the combining zone and which on at least one of its outer surface zones forms a bonding layer (3a) of a porosity (Fig. 4) decreasing from the filler layer (2a) to the substrate (1).

## Revendications

1. Elément de construction composite multicouche, se composant d'au moins une couche porteuse (1), qui comporte au moins partiellement un matériau présentant une déformation élastique et plastique à la rupture, ainsi qu'un matériau présentant une résistance à la traction d'au moins 50 N/mm² (couche du premier type), au moins une couche de remplissage (2a) à porosité plus élevée (couche du deuxième type) et au moins une couche composite (3a) de liaison de cette dernière, **caractérisé en ce que** la couche composite (3a) présente une porosité diminuant de la couche de remplissage (2a) à la couche porteuse (1) (fig. 2, 3).

2. Elément de construction composite multicouche selon la revendication 1, **caractérisé en ce que** la couche composite (3a) constitue une zone de la surface extérieure de la couche de remplissage (2a).

3. Procédé de fabrication d'un élément de construction composite multicouche selon la revendication 1 ou 2, dans lequel des bandes de couches individuelles sont amenées à une zone d'assemblage et y sont appliquées par exercice de pression et de température, ce procédé étant **caractérisé en ce que**, sont amenées à la zone d'assemblage, au moins une couche porteuse (1) et au moins une couche de remplissage (2a) formée d'un matériau polymère thermoplastique et **en ce que** la couche de remplissage (2a) est revêtue d'un agent polymère moussant destiné à être ultérieurement activé dans la zone d'assemblage, lequel agent formant sur au moins l'une des zones de la surface extérieure de la couche de remplissage une couche composite (3a) présentant une porosité qui décroît de la couche de remplissage (2a) à la couche porteuse (1) (fig. 4).
